# EUROPEAN PATENT SPECIFICATION

(11) **EP 2 153 759 B1**
(45) Date of publication and mention of the grant of the patent: **14.12.2011**
(21) Application number: 09014048.4
(22) Date of filing: 08.04.2005
(51) Int. Cl.: A47J 31/44, A47J 31/60

(54) **Device for producing a milk based drink**
Vorrichtung zur Herstellung eines Getränks auf Milchbasis
Dispositif de production de boisson à base de lait

(30) Priority: 21.04.2004 IT MI20040777
(43) Date of publication of application: 17.02.2010
(62) Divisional of application: 05755458.6
(73) Proprietor: De'Longhi SpA, 31100 Treviso (IT)
(72) Inventor: Marconi, Giancarlo, 31057 Silea (Treviso) (IT)
(74) Representative: Rapisardi, Mariacristina

(56) References cited:
- EP-A1- 0 555 766
- US-A- 5 473 972
- US-A- 5 628 239

## Description

The present invention refers to a device for producing a milk-based drink, in particular to a cappuccino, but more generally also to a coffee and milk drink without froth, or furthermore to a drink of just hot milk with or without froth.

It is known that in apparatuses for use in the home for preparing coffee or cappuccino there is a steam dispenser suitable for mixing the milk taken from a container with air to obtain a final emulsion of milk, air and steam that gives the drink the quantity of froth with the desired characteristics. Such an apparatus is described in EP0555766A.

Such apparatuses suffer from some drawbacks, the greatest of which are those due to the awkwardness and poor versatility of use and to the difficulty of access to the inner parts for inspection.

Such apparatuses also do not have a system for cleaning the inner parts or have one that is not very effective so as to gradually bring about a deterioration of performance.

Moreover, the quality of the emulsion can often be penalised by the configuration and/or structural and/or functional characteristics of such conventional apparatuses. For example, the influence that the mixing operation of the milk with the air and the steam addition operation have upon each other, due to the fact that they are carried out in the same area, can have a negative influence upon the quality of the emulsion.

The technical task proposed of the present invention is, therefore, that of making a device for producing a milk-based drink that allows the aforementioned technical drawbacks of the prior art to be eliminated.

In this technical task a purpose of the invention is that of making a device for producing a milk-based drink that is versatile and extremely easy to use.

A further purpose of the present invention is that of providing a device for producing a milk-based drink that is easy to inspect and accessible in all of its parts.

Another purpose of the invention is that of providing a device for producing a milk-based drink that has a system for cleaning the inner parts that is extremely effective so as to keep a high standard of performance.

Another purpose of the present invention is that of providing an effective device for producing a milk-based drink such as to ensure that the drink always has the desired organoleptic characteristics.

The last but not least purpose of the present invention is that of providing a process for producing a cappuccino suitable for automatically carrying out both the brewing of coffee and the frothing of milk with a single command.

The technical task, as well as these and other purposes, according to the present invention, are accomplished by a device as defined in claim 1.

Other characteristics of the present invention are defined, moreover, in the following claims.

Further characteristics and advantages of the invention shall become clearer from the description of a preferred but not exclusive embodiment of the device for producing a milk-based drink according to the finding, illustrated for indicating and not limiting purposes in the attached drawings, in which:
- figure 1 shows an enlarged axial section view of the steam/hot water dispenser - collector body assembly of the device for producing a milk-based drink of the present finding, in which the first scraping means of the air suction pathway and the second scraping means of the milk suction pathway are shown;
- figures 2 and 3 show possible variant embodiments of the dispensing channel of the steam/hot water dispenser and/or of the recess of the collector body into which it is introduced;
- figure 4 shows a perspective view of the device for producing a milk-based drink not being part of the present invention removed from the steam or hot water dispenser of the coffee machine;
- figure 5 shows a perspective view of the device of figure 4 connected to the steam or hot water dispenser of the coffee machine;
- figure 6 shows an axial section of the collector body not being part of the present invention of the device of figure 4;
- figure 7 shows a top side view of an axial section of the collector body not being part of the present invention and of the milk container of the device of figure 4;
- figure 8 shows another perspective view of the device not being part of the present invention of figure 4;
- figure 9 shows the device of figure 4 disassembled into its constituent parts;

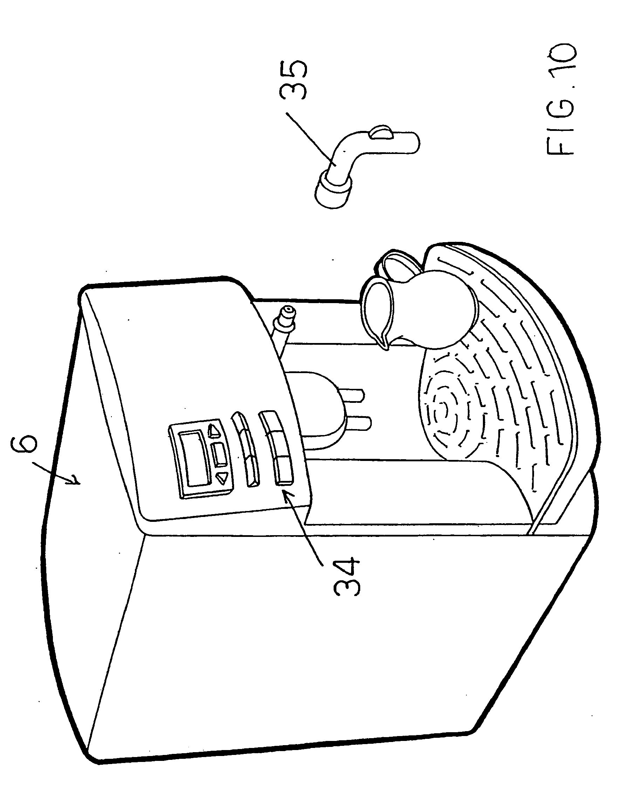

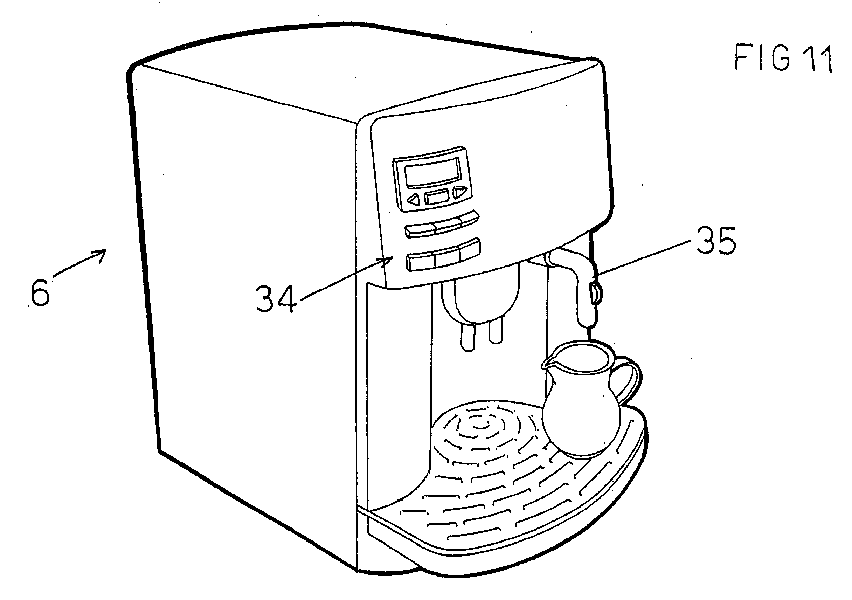

- figures 10 and 11 illustrate a coffee machine equipped with the original steam or hot water dispensing nozzle for the conventional production of a milk-based drink or other drinks;
- figures 12 and 13, respectively, illustrate a section of an internal cleaning system of the collector body and of the nozzle of a device for producing a milk-based drink not being part of the present invention , in rest state and in operating state, respectively;
- figure 14 shows a section view of a system not being part of the present invention, for cleaning the air inlet to the collector body ;
- figure 15 shows a scheme of the water/steam circuit of a device ;
- figure 16 shows a section view of a further preferred embodiment of a system for cleaning the air inlet to the collector body and for adjusting the flow of air through it;
- figures 17 and 18 show a locking system of the connection between the collector body and the dispenser in the two operating positions.

Equivalent parts of the different embodiments of the device in the following description shall be indicated by the same reference numeral.

With reference to the quoted figures, a device for producing a milk-based drink is shown, wholly indicated with reference numeral 1.

The device 1 comprises a steam or hot water dispenser 5 and a container 2 for the milk that directly or indirectly carries a collector body 3 removably associated with the dispenser 5.

The collector body 3 internally defines a recess 300 into which a connection pathway 401 to the dispenser 5, a suction pathway 7 of the milk present in the container 2 and an air suction pathway 10 open.

The collector body 3 can be carried by a cover 26 of the container 2, and in particular, as illustrated, can be formed integrally with it.

Preferably, the collector body 3 extends in a position outside and at the apex of a first side wall 14 of the container 2. The steam or hot water dispenser 5 is, for example, that belonging to a coffee machine 6.

The collector body 3 also has a discharge 8 from the recess 300, to which a discharge nozzle 9 can be removably fitted.

The discharge nozzle 9 is rotatably connected to the discharge 8 of the collector body 3, between a rest position adjacent to the first side wall 14 of the container 2 and a work position distant from it.

In particular, the discharge nozzle 9 has its rotation axis arranged on the extension of the dispenser 5.

The discharge nozzle 9 also has a manual grip 15 for moving from rest position to work position and vice-versa.

The container 2 has a substantially quadrangular shape in plan, with a grip 18 at a second side wall 19 perpendicular to the axial extension of the steam or hot water dispenser 5, and a lip 20 formed in a third side wall 21 of the container 2 opposite the side wall 19.

The pouring lip 20 is suitable for pouring the milk when the device 1 is not connected to the coffee machine 6. Advantageously, indeed, the container 2 can also be used independently to conserve milk in the refrigerator so as to make cold milk immediately available to the customer.

The container 2 has a pocket 22 formed outside of the first side wall 14 of the container 2 and below the discharge nozzle 9 to collect possible leakages of drops of liquid when the discharge nozzle 9 is in rest position.

The container 2 also has a substantially vertical supply channel of the milk from the bottom of the container 2 to the suction pathway 7 of the collector body 3, also formed outside the first side wall 14 of the container 2.

The suction pathway 7 has a portion connected with the milk supply channel 23.

The device 1 also has a flexible tube 25 that extends axially inside the milk supply channel 23 and projects at one end towards the bottom of the container 2 and at the other end inside the fitting portion 24 of the suction pathway 7.

The collector body 3, the milk supply channel 23, the discharge nozzle 9 and the collection pocket 22 are arranged in a recess of the first side wall of the container 2 to limit the overall bulk of the device 1.

The device 1 advantageously comprises at least first scraping means 402 suitable for carrying out a cleaning scrape of the inner surface of the air suction pathway 10.

Preferably, the device 1 also comprises second scraping means 408 suitable for carrying out a cleaning scrape of the inner surface of the milk suction pathway 7, carried by the dispenser 5 so as to be actuated automatically during its introduction and/or removal into/from the recess 300.

The second scraping means 408 can comprise at least one protrusion 416 of the side surface of the dispenser 5.

Finally, the device 1 can also comprise means 403 for adjusting the air flow rate through the air suction pathway 10, and possible manual control means 407 of the means 403 for adjusting the air flow rate.

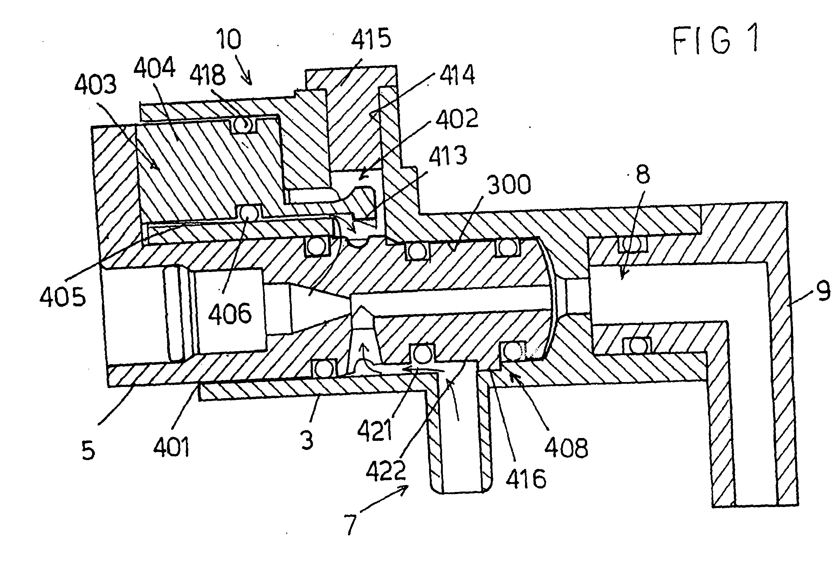

For now we shall refer to the embodiments illustrated in figure 1-3, 14 and 16.

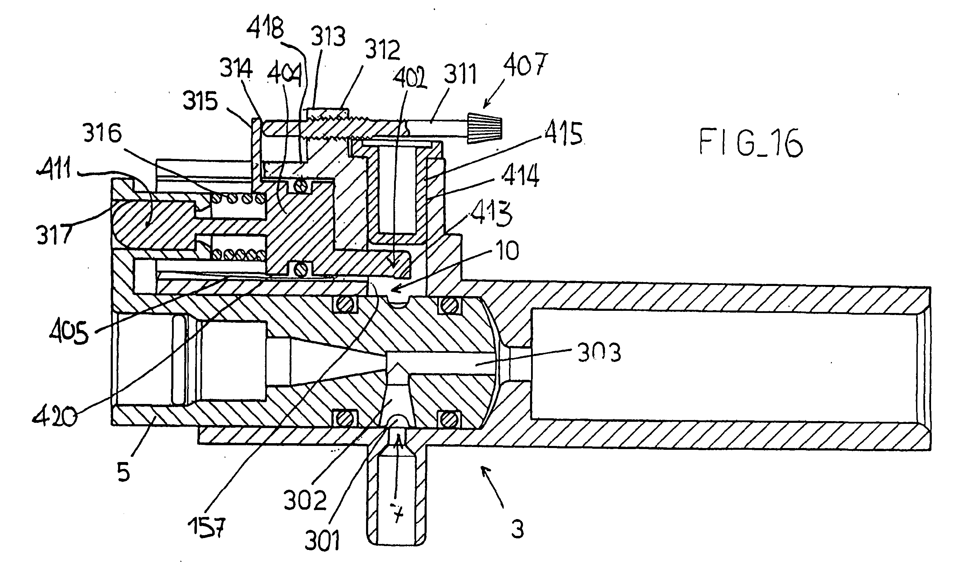

The first scraping means 402 are fixed rigidly (figures 1-3 and 14) or operatively (figure 16) to the dispenser 5 so as to be actuated automatically during its introduction and/or removal into/from the recess 300.

In the first case the first scraping means 402 in particular are formed integrally with the dispenser 5 (figures 1-3 and 14).

The means 403 for adjusting the air flow rate, on the other hand, comprise a shutter 404 that can slide in the suction pathway 10.

The shutter 404 is fixed rigidly (figures 1-3 and 14) or operatively (figure 16) to the dispenser 5.

In the first case the shutter 404 is formed integrally with the dispenser 5.

Between the side surface of the shutter 404 and the inner surface of the suction pathway 10 an interspace 420 is defined that is sealed by a sealing element, in particular a toroidal ring 418, carried peripherally by the shutter 404.

The inner surface of the air suction pathway 10 also has at least one tapered or inclined discharge 405, which determines the air flow rate according to the position of the shutter 404.

In figures 1-3 the discharge 405 has an interruption 406 so that when the sealing element 418 is at the interruption 406 the passage of air is totally blocked, whereas when the sealing element 418 is misaligned with the interruption 406 the air flow (indicated by an arrow) is allowed through the discharge 405 and the interspace 420.

The first scraping means preferably comprise an elastically yielding scraping tooth 413, in particular supported cantilevered by the shutter 404.

The scraping tooth 413 deforms elastically against the surface of the discharge 405 during the introduction of the dispenser 5, lifting up, until, disengaging from the end part 157 of the discharge 405, it lowers back down with a snap movement intended to release the accumulated elastic deformation and it positions itself along a line of interference with the end 157 of the discharge 405.

The scraping tooth 413, having the base inclined, moves automatically with respect to the line of interference with the end 157 of the discharge 405 to allow the disconnection of the dispenser 5 from the collector body 3.

For moulding purposes there is an opening 414 of the wall of the air suction pathway 10, closed by a cap 415.

The control means 407 (figure 16) comprise a thrusting member 311 suitable for moving the shutter 404 in opposition to the action of an elastic element 316, for example a spring, to be placed between the shutter 404 and the dispenser 5.

The thrusting member 311 is, for example, an adjustment screw engaged in a threaded seat 312 formed through a projection 313 of the collector body 3, the free end 314 of the screw 311 acting on an abutment 315 extending from the shutter 404 contrasting the action of the spring 316.

In such a case the shutter 404 has a tailpiece 411 slidably guided parallel to the main axis of the collector body 3 along a guide 317 integral, and in particular formed in a single piece, with the dispenser 5.

The turning of the screw 311 causes the abutment 315 and the shutter 404 to move forward or backward and consequently the port for the passage of the air flow to be adjusted.

Of course, the adjustment system can foresee, instead of the adjustment screw 311, an eccentric or a cam that is able to move the abutment 315.

In figures 1-3 and 16 the dispenser 5 defines a pre-mixing chamber 311 of the flows coming from the pathways 7 and 10, and the pre-mixing chamber 301 in turn communicates, through a preferably tapered transversal passage 301 of the dispenser 5, with the dispensing channel 303 of the dispenser 5.

In particular, a part of the pre-mixing chamber 301 can be formed from an annular channel of the side surface of the dispenser 5.

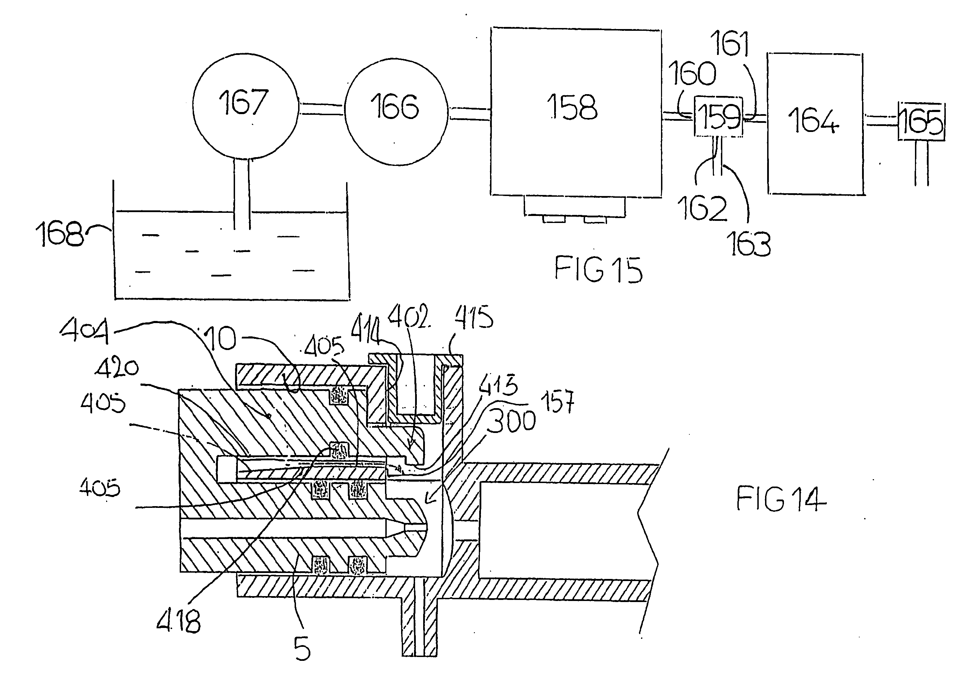

In figure 14, in the other hand, the flows from the pathways 7 and 10 and from the dispenser 5 mix in a single solution in a mixing chamber defined by the free portion of the recess 300 defined by the dispenser 5.

In figures 1-3, so that the second scraping means can operate, the milk suction pathway is misaligned from the transversal passage 302 of the dispenser 5 and therefore a connection passage 421 is foreseen defined by a side hollow 422 of the dispenser 5, whereas in figure 16, since the second scraping means are not foreseen, the milk suction pathway 7 and the transversal passage 302 of the dispenser 5 are aligned and directly communicate.

The channel of the dispenser 5 must optimise the emulsion and at the same time be easy to inspect and clean.

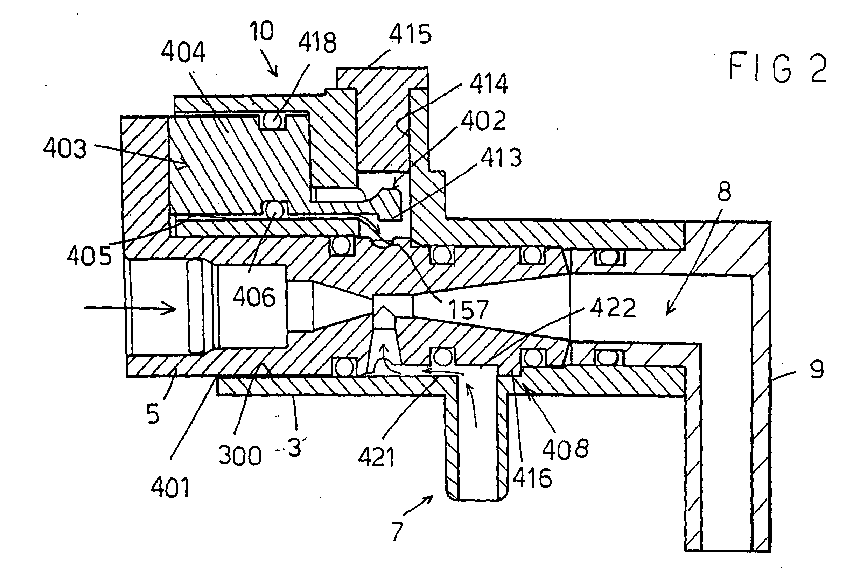

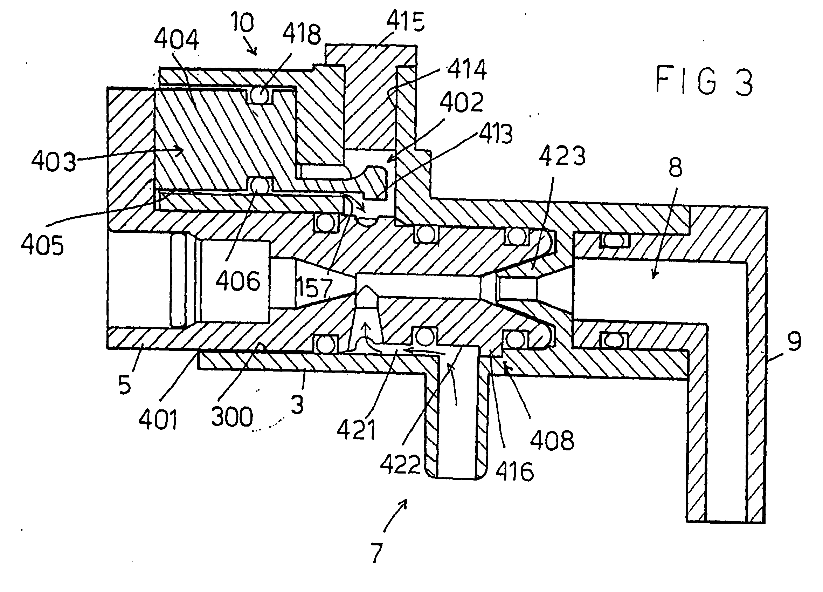

Many geometries are proposed the achieve the objective, and in particular in figures 1 and 14 the channel of the dispenser is rectilinear, in figure 2 it is divergent, and in figure 3 it is mixed with an initial rectilinear part and a divergent end part in which a reducer 423 is inserted formed integrally from the collector body 3.

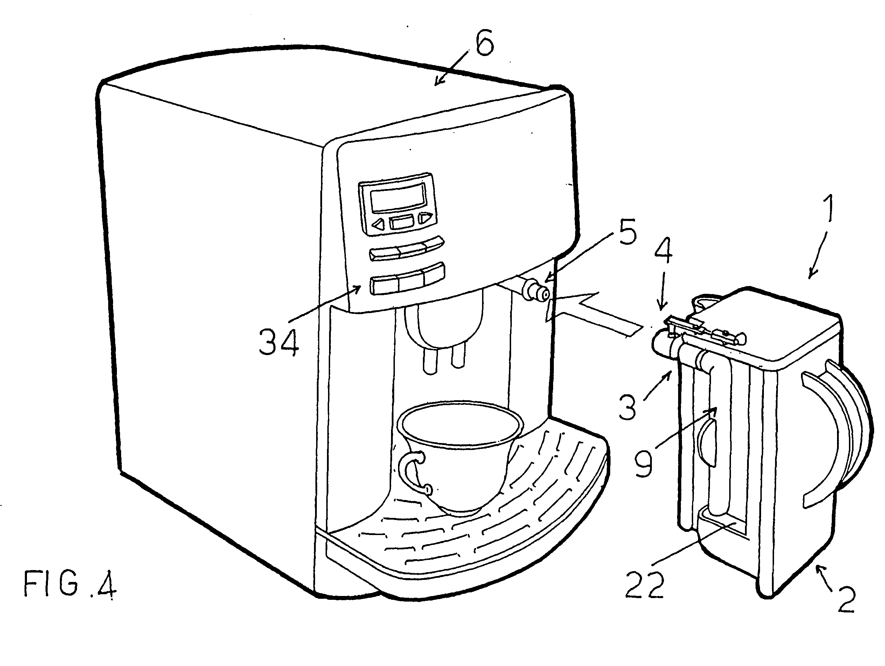

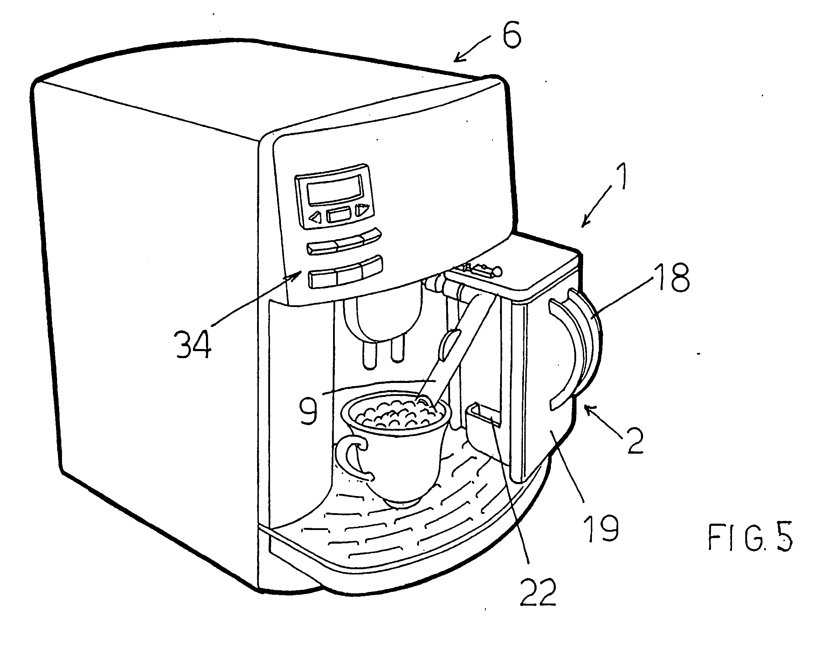

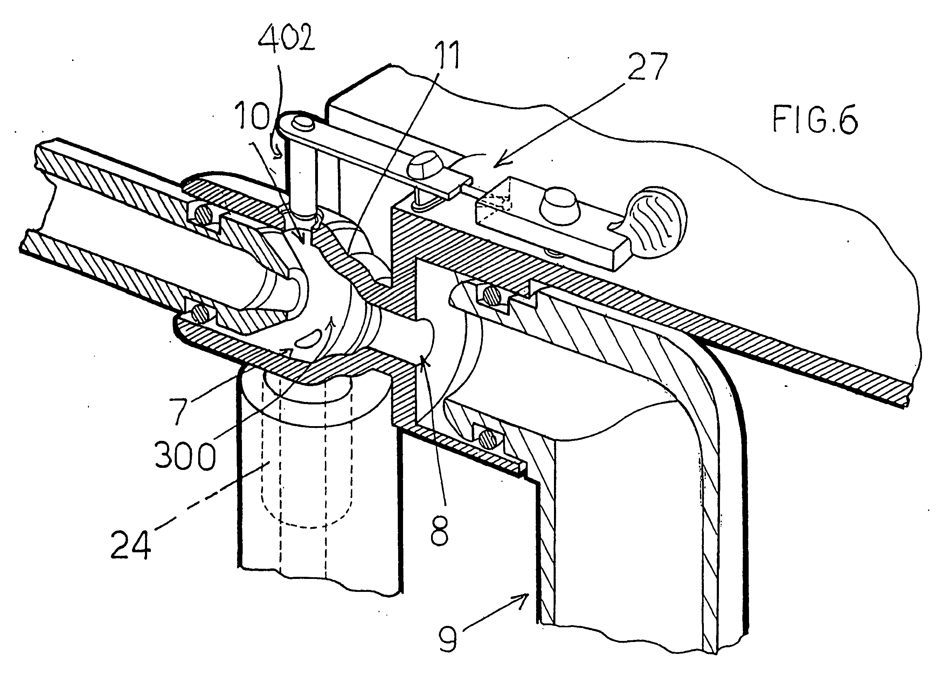

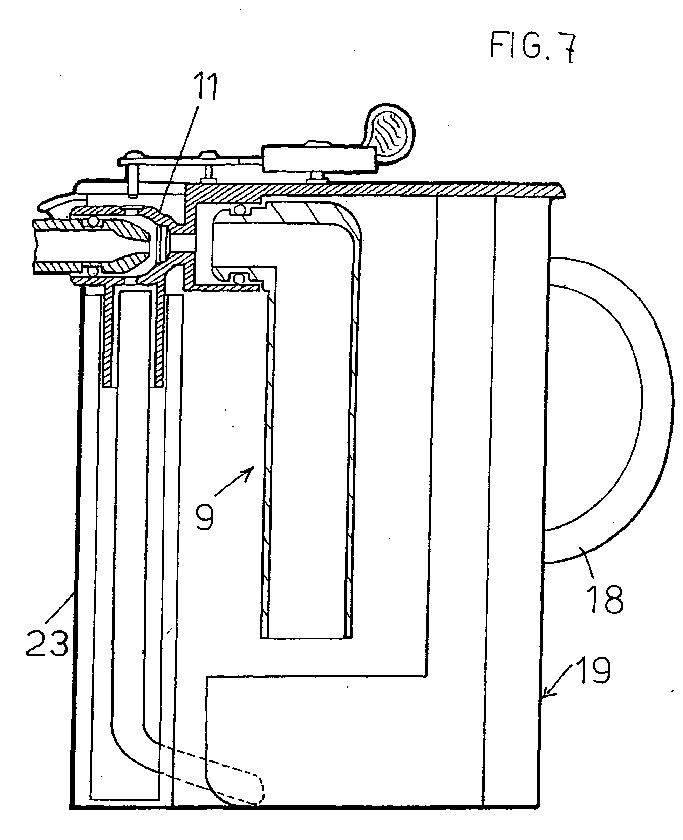

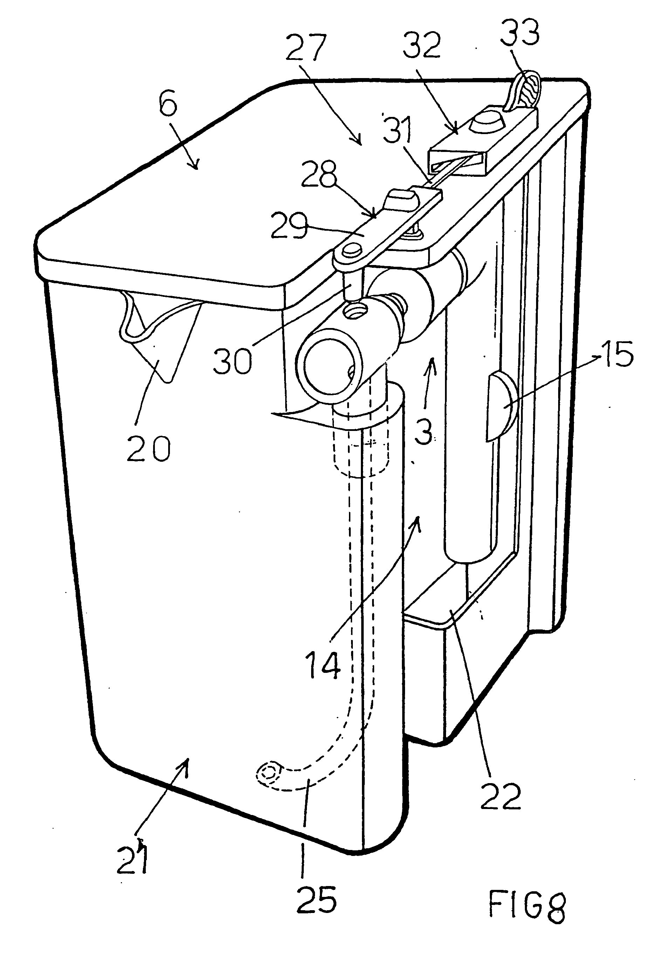

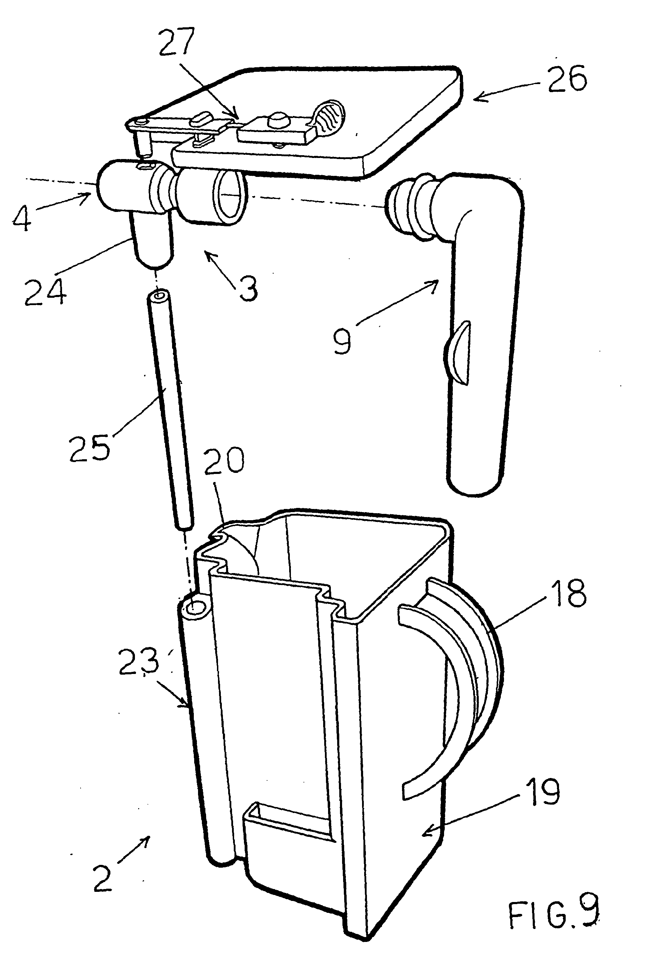

We shall now refer, in particular, to figures 4-9.

Amongst other things, they show a different embodiment of the first scraping means.

In particular, the pathway 4 and the discharge pathway 8 are arranged in parallel along the main axis of the collector body 3, whereas the milk inlet pathway 7 and the air inlet pathway 10 are arranged transversally to the main axis of the collector body 3 and diametrically opposite.

Like in figure 14, the flows from the pathways 7 and 10 and from the dispenser 5 mix in a single solution in the mixing chamber defined by the free portion of the recess 300 defined by the dispenser 5.

In this case, then, the recess 300 has a convergent portion 11, suitable for creating a Venturi effect that determines the sucking up of milk from the container 2 when it is crossed by the flow of steam.

The scraping means for cleaning the inner surface of the pathway 10 are advantageously actuated by a manually controlled leverism 27 pivoted directly on the cover 26.

The leverism 27 comprises a lever 28 that can be operated perpendicular to the lying plane of the cover 26 and having a first lever arm 29 carrying a scraping finger 30 of the third pathway 10 and a second lever arm 31 arranged in a guide pivoted on the cover 26 and rotatable parallel to the lying plane of the cover 26.

The guide 32 has a guide plane that is inclined with respect to the lying plane of the cover 26 so that a rotation in one direction and, respectively, in the opposite direction commands the lowering and raising, respectively, of the first lever arm 31 and consequently the extraction and introduction, respectively, of the scraping finger 30 into/from the pathway 10.

The control of the leverism 27 is carried out manually through an ear 33 integral with the guide 32.

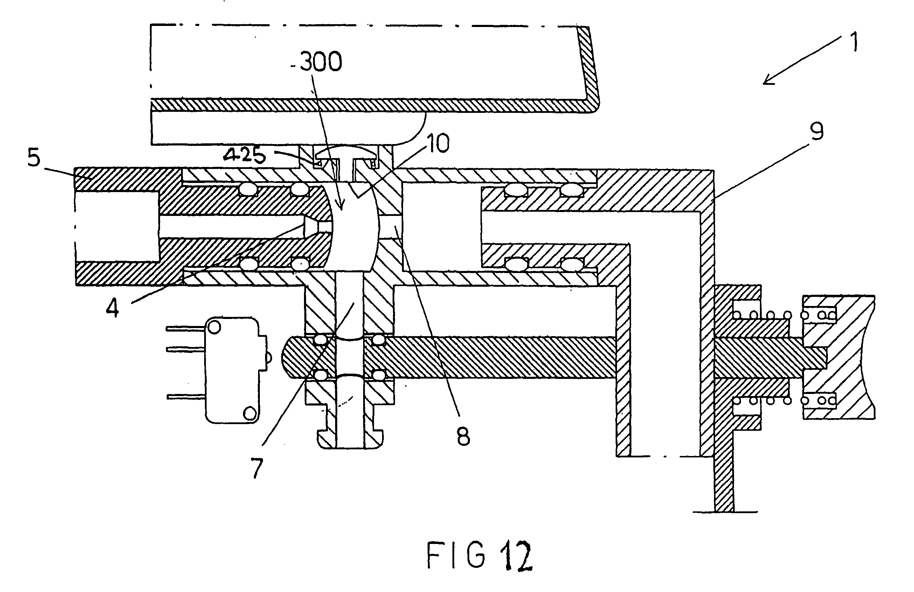

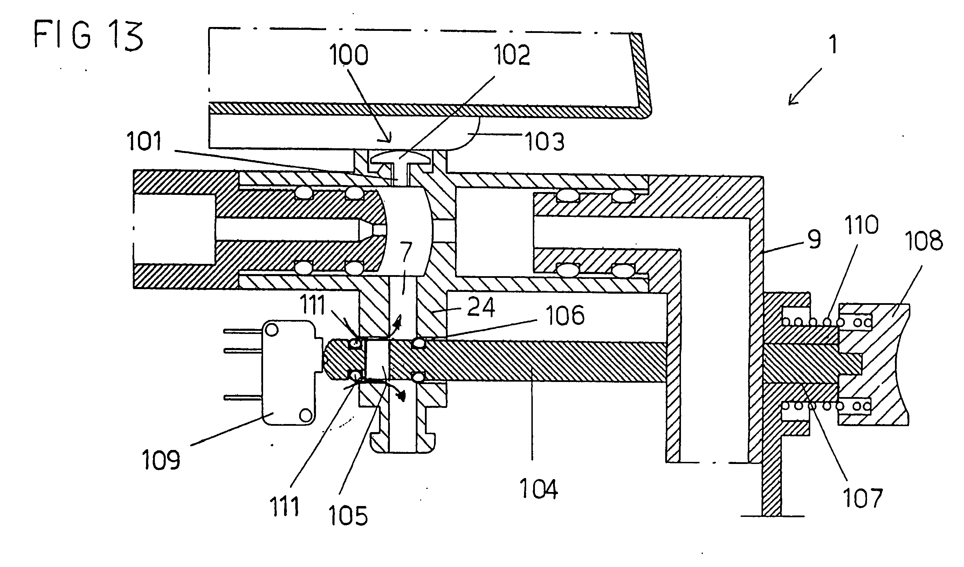

We shall now refer, in particular, to figures 12 and 13.

The first scraping means in this case comprise a scraping finger 101 that can slide in the pathway 10 and having a widened head 102 against which a spring 425 acts that keeps it partially raised.

When the collector body 3 is connected with the dispenser 5, a cam 103 integral with the casing of the coffee machine 6 acts upon the widened head 102, in contrast to the spring, to actuate the scraping finger 101.

Of course, the air passes through an interspace foreseen between the scraping finger 101 and the inner surface of the pathway 10.

In figures 12 and 13 an internal cleaning system of the collector body 3 and of the discharge nozzle 9 is also illustrated.

Such a cleaning system comprises a microswitch 109 suitable for generating a signal of the absence of dispensing of a flow of steam through the dispenser 5.

The cleaning system also foresees a shaft-shaped actuator 104 of the microswitch 109 transversally intersecting the pathway 7 and having a first transversal through hole 105 aligned with the inner port of the pathway 7 when the actuator 104 is in a first operating position of disengagement from the microswitch 109, and misaligned from it when the actuator 104 is in a second operating position of engagement with the microswitch 109.

Preferably, the actuator 104 has gaskets 11 at the opposite sides of the first hole 105 suitable for forming a seal, when the shaft 104 is in the first operating position, with the side wall of a second transversal through hole 106 of the pathway 7 through which the shaft 104 is arranged.

The actuator 104 is slidably supported by a guide 107 integral with the body of the container 2 and carries, at the opposite end to the one that can be engaged with the microswitch 109, a button 108 that can be actuated manually in contrast to a spring 110 placed between the guide 107 and the button 108 itself.

Basically, when the button 108 is not pressed, the actuator 104 remains in the first operating position and has the opening 105 aligned with the pathway 7 to allow the passage of milk.

On the other hand, when and all the whilst that the button 108 is pressed, the actuator 104 goes to the second operating position in which it simultaneously engages with the microswitch 109 to generate the signal of the absence of the dispensing of the flow of steam and has the opening 105 completely misaligned with the pathway 7 to prevent the passage of milk.

The steam flows through the collector body 3 creating a depression that sucks air both from the pathway 7 and from the third pathway 10, and arrives at the nozzle 9 from which it is finally expelled. In particular, this depression causes the cleaning of the pathway 7 from possible milk residues and at the same time allows the milk to go back down (arrows fig. 13) into the container.

In a possible variant to carry out the complete cleaning of the pathway 7, the nozzle 9 in the rest position engages with a sealing gasket (not shown) that seals its free end preventing the steam from coming out.

In this case the pressure of the steam discharges through the pathway 7 when the button 108 is released.

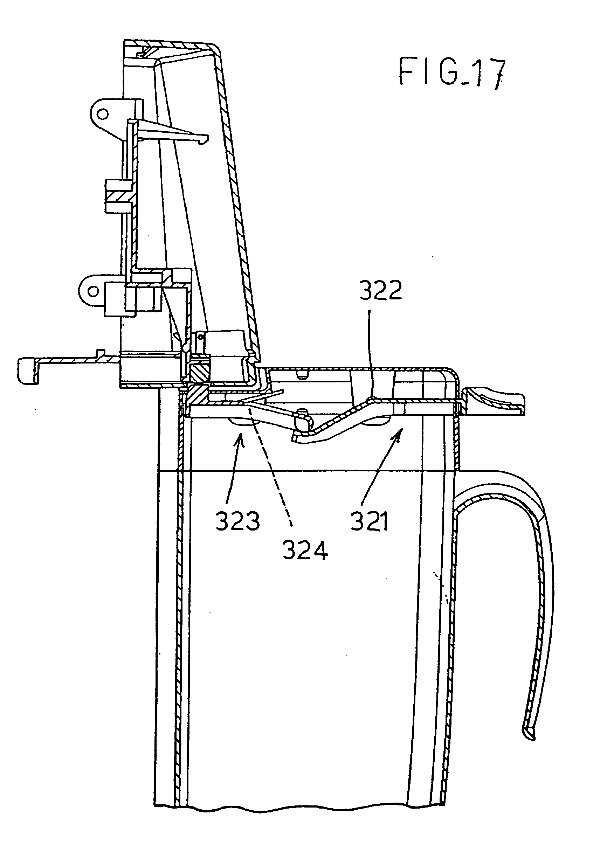

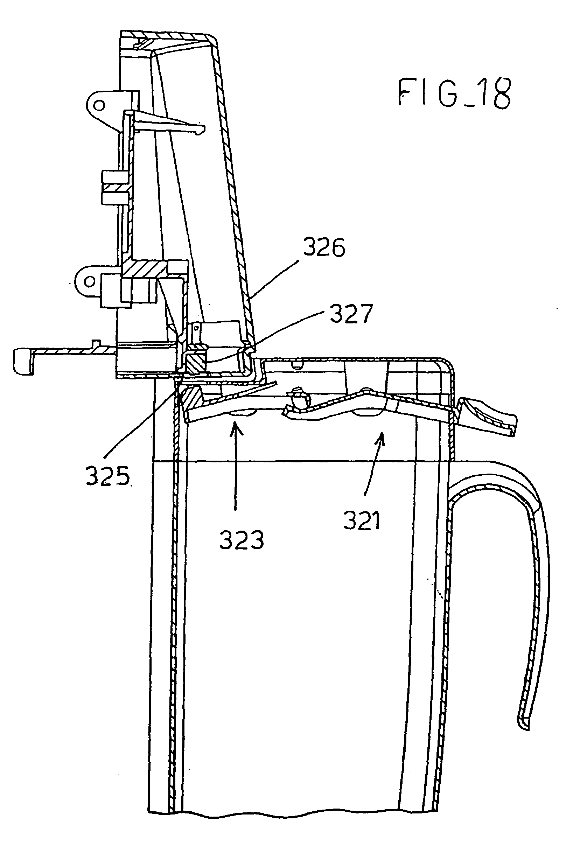

In figures 17 and 18 an automatic locking system is illustrated, suitable for locking the container in engagement position between the collector body 3 and the dispenser 5.

The locking system has a first manual control lever 321 operatively supported at 322 by the container 2 and a second lever 323 operatively supported at 324 by the container 2 and controlled by the first control lever 321 between an attached position and a detached position from an engagement seat 325 formed in the casing 326 of the machine.

The device comprises a second microswitch 327 for switching the function of the machine, suitable for enabling the production of steam and, therefore, the cleaning system of the collector body 3 and of the nozzle 9 when the automatic locking system is operative and for preventing the production of steam when the automatic locking system is not operative. The second microswitch 327 is positioned in said engagement seat 325 of the second lever 323 and is switched by the second lever 323 at the moment of engagement/disengagement in the engagement seat 325.

In particular, when the collector body 3 of the container 2 is removed from the dispenser 5, the second microswitch 327 is deactivated and the steam production function and, therefore the internal cleaning function of the collector body 3 and of the nozzle 9, is prevented.

When, on the other hand, the collector body 3 of the container 2 is connected to the dispenser 5, the second microswitch 327 is activated and the production of steam is enabled and operative.

The process for producing a cappuccino is briefly the following.

The coffee machine 6 has a keypad 34 having at least one button for commanding the production of a cappuccino and buttons for activating the functions of steam and water production to be sent to the dispenser 5.

The device 1 is associated with the coffee machine by introducing the dispenser 5 into the inlet pathway 4, and then the button for activating the steam function is pressed.

When the button that enables the production of a cappuccino is pressed, the control unit of the coffee machine automatically commands the preparation of a dose of brewed coffee in a cup positioned below the dispenser group of the coffee machine, the withdrawal of a predetermined amount of milk contained in the container 2 through the action of a steam flow sent by the dispenser 5 and the consequent controlled frothing of the milk through the effect of the air entering through the inlet pathway 10 of the collecting chamber 3, the interruption of the flow of steam when the predetermined amount of milk has been withdrawn, and the final conveying of the milk into the cup for its to be mixed with the brewed coffee.

Clearly, it is possible to prepare the milk first and then the brewed coffee or vice-versa.

In the case in which its is wished to produce a coffee and milk-based drink without froth the same procedure described above is repeated actuating the means for adjusting the air flow so as to zero the air flow.

The coffee machine, through a suitable command, can also command the production of an exclusively frothed milk-based drink. In this case the same procedure described above is repeated eliminating the first step of producing a dose of brewed coffee in the cup.

After having removed the device 1 the dispenser 5 can once again have its nozzle 35 with which it was originally equipped connected. In this way, a cappuccino can be produced with the more conventional method, pressing the buttons for activating the steam production function, or else hot water can be produced for the preparation of a tea-based or other brew, pressing the buttons for activating the hot water production. Now with reference to figure 15, a preferred embodiment of the hot water production circuit and of the steam production circuit is illustrated, which are both supplied by an electropump 166 controlled by a flowmeter 167 and suitable for withdrawing water from a reservoir 168.

The hot water circuit comprises a first boiler 158 (suitable for producing hot water) connected through a first valve (not shown) to the brewing chamber of the coffee machine.

The steam circuit extends from the first boiler 158 through a second electrovalve 159 having three pathways 160, 161 and 162 that puts the first boiler 158 in communication with a discharge line 163 and with a second boiler 164 for producing steam in turn connected to the steam dispenser 5 through a third electrovalve 165.

To produce a cappuccino, when the operator gives a single command, first of all the water circuit for the preparation of the brewed coffee is activated.

In this step the first valve is open, whereas the second and third electrovalve 159 and 165 remain closed and the electropump 166 is actuated until the flowmeter 167 has measured the passage into the first boiler 158 of a predetermined volume of water to make the brewed coffee.

Then the steam circuit for frothing the milk is activated.

In this step the first valve closes whereas the second electrovalve 159 opens the pathways 160 and 161 and keeps the pathway 162 of the discharge line closed, the third electrovalve 165 opens, and the electropump 166 is actuated until the flowmeter 167 has measured the passage into the second boiler 164 of a predetermined volume of water to make the steam necessary to froth the milk.

Finally, there follows a discharge step of the pressure of the steam, in which the second electrovalve 159 keeps the pathway 161 open, closes the pathway 160 and opens the steam discharge pathway 163.

Preferably, to limit the absorption of electrical energy the first and second boiler are selectively activated, possibly intermittently, and thus the water destined for the second boiler is not necessarily preheated in the first boiler. Moreover, when the second boiler is activated the opening of the electrovalve 165 is delayed with respect to the starting of the electropump 166 so as to generate pressurised steam. The device for producing a milk-based drink thus conceived can undergo numerous modifications and variants, all of which are covered by the inventive concept as defined in claim 1; moreover, all of the details can be replaced with technically equivalent elements.

In practice, the materials used, as well as the sizes, can be whatever according to the requirements and the state of the art.

## Claims

1. Device (1) for producing a milk-based drink, comprising a steam or water dispenser (5) and a container (2) for the milk that carries, directly or indirectly, a collector body (3) that defines an inner recess (300) into which a connection pathway (401) to said dispenser (5), a milk suction pathway (7) in said container (2) and an air suction pathway (10) open,
said dispenser (5) defining, in said recess (300) of said collector body (3), a pre-mixing chamber (311) of the flows coming from said air suction pathway (10) and said milk suction pathway (7), said pre-mixing chamber (311) communicating through a transversal passage (301) of said dispenser (5) with the dispensing channel (303) of said dispenser (5),
said container (2) being removably associated with said dispenser (5) so as to be able to be separated from it for conservation of the milk present in said container (2), **characterised in that** it comprises scraping means (408) suitable for carrying out a cleaning scrape of the inner surface of said milk suction pathway (7), carried by said dispenser (5) so as to be actuated automatically during the introduction and/or removal of said dispenser (5) into/from said recess (300), and
**in that** in use said milk suction pathway (7) it misaligned from said transversal passage (301) of said dispenser (5) and a connection passage (421) is foreseen defined by a side hollow (422) of said dispenser.

2. Device according to claim 1, **characterised in that** said scraping means (408) comprise a protrusion (416) of the side surface of said dispenser (5).

3. Device according to any one of previous claims, **characterised in that** it also comprises scraping means (402) suitable for scraping clean the inner surface of said air suction pathway (10).

4. Device according to any one of the previous claims, **characterised in that** said collector body (3) is carried by a cover of said container.

5. Device according to any one of the previous claims, **characterised in that** said scraping means (402) for said air suction pathway (10) are rigidly or operatively connected to said dispenser (5) so as to be actuated automatically during the introduction and/or removal of said dispenser in said recess.

6. Device according to any one of the previous claims, **characterised in that** said dispenser defines, in said recess (300) of said collector body (3), a mixing chamber where the flows coming from said dispenser, said air suction pathway (10) and said milk suction pathway (7) flow together.

7. Device according to one or more of the previous claims, **characterised in that** said pre-mixing chamber (311) is defined by a perimetric hollow (422) of the side surface of said dispenser (5).

8. Device according to any one of the previous claims, **characterised in that** said transversal passage (301) of said dispenser (5) is tapered.

## Patentansprüche

1. Vorrichtung (1) zur Herstellung eines Getränks auf Milchbasis, umfassend eine Dampf- oder Wasserausgabe (5) und einen Behälter (2) für die Milch, der direkt oder indirekt einen Sammelkörper (3) trägt, der eine innere Vertiefung (300) abgrenzt, in die eine Verbindungsbahn (401) zur Ausgabe (5), eine Milchansaugbahn (7) im Behälter (2) und eine Luftansaugbahn (10) führen, wobei die Ausgabe (5) in der Vertiefung (300) des Sammelkörpers (3) eine Vormischungskammer (311) der Durchflüsse abgrenzt, die von der Luftansaugbahn (10) und der Milchansaugbahn (7) kommen, wobei die Vormischungskammer (311) durch einen transversalen Durchlass (301) der Ausgabe (5) mit dem Ausgabekanal (303) der Ausgabe (5) in Verbindung steht, wobei der Behälter (2) entfernbar an die Ausgabe (5) anschließt, sodass er fähig ist, zur Konservierung der Milch, die in dem Behälter (2) vorhanden ist, davon getrennt zu werden, **dadurch gekennzeichnet, dass** sie Abstreifmittel (408) zum Ausführen eines reinigenden Abstreifens der Innenfläche der Milchansaugbahn (7) umfasst, die von der Ausgabe (5) getragen werden, sodass sie automatisch während des Einführens und/oder des Entfernens der Ausgabe (5) in die/aus der Vertiefung (300) ausgelöst werden und dass die Milchansaugbahn (7) in der Verwendung vom transversalen Durchlass (301) der Ausgabe (5) versetzt ist und ein Verbindungsdurchlass (421) vorgesehen ist, der von einem seitlichen Hohlraum (422) der Ausgabe abgegrenzt wird.

2. Vorrichtung nach Anspruch 1, **dadurch gekennzeichnet, dass** die Abstreifmittel (408) einen Vorsprung (416) der seitlichen Oberfläche der Ausgabe (5) umfassen.

3. Vorrichtung nach einem der vorangehenden Ansprüche, **dadurch gekennzeichnet, dass** sie ferner Abstreifmittel (402) umfasst, die dazu geeignet sind, die Innenfläche der Luftansaugbahn (10) abstreifend zu reinigen.

4. Vorrichtung nach einem der vorangehenden Ansprüche, **dadurch gekennzeichnet, dass** der Sammelkörper (3) von einer Abdeckung des Behälters getragen wird.

5. Vorrichtung nach einem der vorangehenden Ansprüche, **dadurch gekennzeichnet, dass** die Abstreifmittel (402) für die Luftansaugbahn (10) starr oder betriebsbereit mit der Ausgabe (5) verbunden sind, sodass sie automatisch während des Einführens und/oder des Entfernens der Ausgabe in die/aus der Vertiefung ausgelöst werden.

6. Vorrichtung nach einem der vorangehenden Ansprüche, **dadurch gekennzeichnet, dass** die Ausgabe in der Vertiefung (300) des Sammelkörpers (3) eine Mischungskammer abgrenzt, in der die Durchflüsse zusammenfließen, die von der Ausgabe, der Luftansaugbahn (10) und der Milchansaugbahn (7) kommen.

7. Vorrichtung nach einem oder mehreren der vorangehenden Ansprüche, **dadurch gekennzeichnet, dass** die Vormischungskammer (311) von einem perimetrischen Hohlraum (422) der seitlichen Oberfläche der Ausgabe (5) abgegrenzt wird.

8. Vorrichtung nach einem der vorangehenden Ansprüche, **dadurch gekennzeichnet, dass** der transversale Durchlass (301) der Ausgabe (5) konisch ist.

## Revendications

1. Dispositif (1) de production de boisson à base de lait, comprenant un distributeur de vapeur ou d'eau (5) et un récipient (2) pour le lait qui porte, directement ou indirectement, un corps collecteur (3) qui définit une cavité intérieure (300) dans laquelle s'ouvrent un passage de raccord (401) audit distributeur (5), un passage d'aspiration de lait (7) dans ledit récipient (2) et un passage d'aspiration d'air (10), ledit distributeur (5) définissant, dans ladite cavité (300) dudit corps collecteur (3), une chambre de pré-mélange (311) des débits provenant dudit passage d'aspiration d'air (10) et dudit passage d'aspiration de lait (7), ladite chambre de pré-mélange (311) communiquant par un passage transversal (301) dudit distributeur (5) avec le canal de distribution (303) dudit distributeur (5), ledit récipient (2) étant associé de manière amovible audit distributeur (5) de façon à en être séparé pour conserver le lait présent dans ledit récipient (2), **caractérisé en ce qu'**il comprend des moyens racleurs (408) pouvant racler et nettoyer la surface intérieure dudit passage d'aspiration de lait (7), portés par ledit distributeur (5) de sorte à fonctionner automatiquement au moment de l'introduction et/ou du retrait dudit distributeur (5) dans/de ladite cavité (300), et **en ce que**, en cours de fonctionnement, ledit passage d'aspiration de lait (7) est désaligné par rapport audit passage transversal (301) dudit distributeur (5), et un évidement latéral (422) dudit distributeur définit une voie de raccord (421).

2. Dispositif selon la revendication 1, **caractérisé en ce que** lesdits moyens racleurs (408) présentent une saillie (416) de la surface latérale dudit distributeur (5).

3. Dispositif selon l'une quelconque des revendications précédentes, **caractérisé en ce qu'**il comprend aussi des moyens racleurs (402) pouvant racler et nettoyer la surface intérieure dudit passage d'aspiration d'air (10).

4. Dispositif selon l'une quelconque des revendications précédentes, **caractérisé en ce que** ledit corps collecteur (3) est porté par un couvercle dudit récipient.

5. Dispositif selon l'une quelconque des revendications précédentes, **caractérisé en ce que** lesdits moyens racleurs (402) pour ledit passage d'aspiration d'air (10) sont raccordés rigidement ou opérationnellement audit distributeur (5), de sorte à fonctionner automatiquement au moment de l'introduction et/ou du retrait dudit distributeur dans ladite cavité.

6. Dispositif selon l'une quelconque des revendications précédentes, **caractérisé en ce que** ledit distributeur définit, dans ladite cavité (300) dudit corps collecteur (3), une chambre de mélange où les débits provenant dudit distributeur, dudit passage d'aspiration d'air (10) et dudit passage d'aspiration de lait (7) se rejoignent.

7. Dispositif selon l'une ou plusieurs des revendications précédentes, **caractérisé en ce que** ladite chambre de pré-mélange (311) est définie par un évidement périphérique (422) de la surface latérale dudit distributeur (5).

8. Dispositif selon l'une quelconque des revendications précédentes, **caractérisé en ce que** ledit passage transversal (301) dudit distributeur (5) est conique.
